# EUROPEAN PATENT APPLICATION

(11) **EP 4 280 655 A1**
(43) Date of publication of application: **22.11.2023**
(21) Application number: 21919446.1
(22) Date of filing: 18.01.2021
(51) Int. Cl.: H04W 16/32, H04W 24/10, H04W 56/00, H04W 48/16

(54) **TERMINAL, COMMUNICATION METHOD, AND BASE STATION**

(71) Applicant: NTT DOCOMO, INC., Tokyo 100-6150 (JP)
(72) Inventor: OHARA, Tomoya, Tokyo 100-6150 (JP)
(74) Representative: Hoffmann Eitle
(86) International application number: PCT/JP2021/001544
(87) International publication number: WO 2022/153553

(57) **Abstract**

A terminal includes a receiving unit that receives information indicating activation of a secondary cell; a control unit that activates the secondary cell based on the information received by the receiving unit and a temporary reference signal transmitted via the secondary cell, the temporary reference signal being transmitted at a timing after the reception of the information, the timing after the reception of the information being prior to receiving a first synchronization signal block with respect to time via the secondary cell; and a transmitting unit that reports channel state information based on the temporary reference signal.

## Description

### [Technical Field]

The present invention relates to a terminal and a base station in a radio communication system.

### [Background Art]

In the 3rd Generation Partnership Project (3GPP), a study on a radio communication system referred to as 5G or New Radio (NR) (in the following, the radio communication system is referred to as "NR") has been advanced, in order to achieve a further increase in system capacity, a further increase in a data transmission rate, a further reduction of latency in a radio section, and the like. In 5G, in order to meet the requirements that, while achieving a throughput of greater than or equal to 10 Gbps, latency in the radio section is reduced to be less than or equal to 1 ms, various radio technologies and various types of network architecture have been studied.

An extension of MR-DC/CA (Further Multi-RAT Dual-Connectivity enhancement) is being studied for Release 17 of 3GPP (Non-Patent Document 1). The study items of the study of the extension of MR-DC/CA include a study on an efficient activation/deactivation mechanism for a secondary cell (SCell) .

### [Citation List]

### [Non Patent Literature]

[NPL 1] 3GPP TSG RAN Meeting #88e, RP-201040, Electronic Meeting, June 29-July 3, 2020
[NPL 2] 3GPP TS 38.133 V15.5.0(2019-03)

### [Summary of Invention]

### [Technical Problem]

In New Radio (NR), there is a case in which a Synchronization Signal Block (SSB) transmission periodicity takes a large value (e.g., 20 ms or 160 ms). In this case, T_{FirstSSB} in an SCell activation delay may be a relatively large value, and, thus, a time interval required for a terminal to complete activation of an SCell after the terminal receives an SCell activation command may increase.

There is a need for a method of shortening an SCell activation delay.

### [Solution to Problem]

According to the disclosed technology, there is provided a terminal including a receiving unit that receives information indicating activation of a secondary cell; a control unit that activates the secondary cell based on the information received by the receiving unit and a temporary reference signal transmitted via the secondary cell, the temporary reference signal being transmitted at a timing after the reception of the information, the timing after the reception of the information being prior to receiving a first synchronization signal block with respect to time via the secondary cell; and a transmitting unit that reports channel state information based on the temporary reference signal.

### [Advantageous Effects of Invention]

According to the disclosed technology, a method of shortening an SCell activation delay is provided.

### [Brief Description of Drawings]

[Fig. 1]

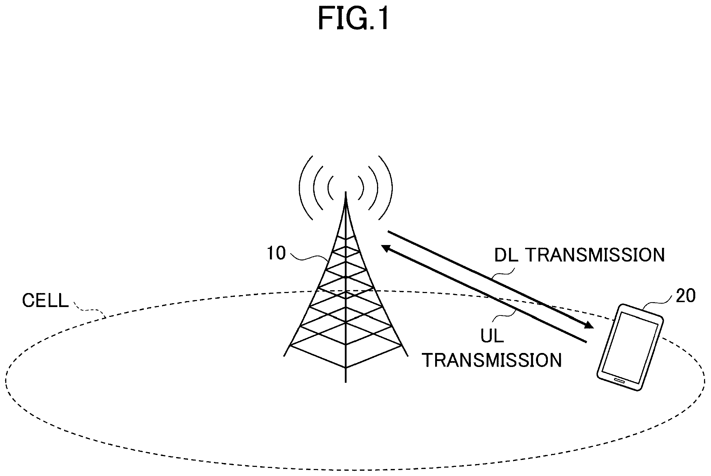

   Fig. 1 is a diagram for illustrating a radio communication system according to an embodiment of the present invention.
[Fig. 2]

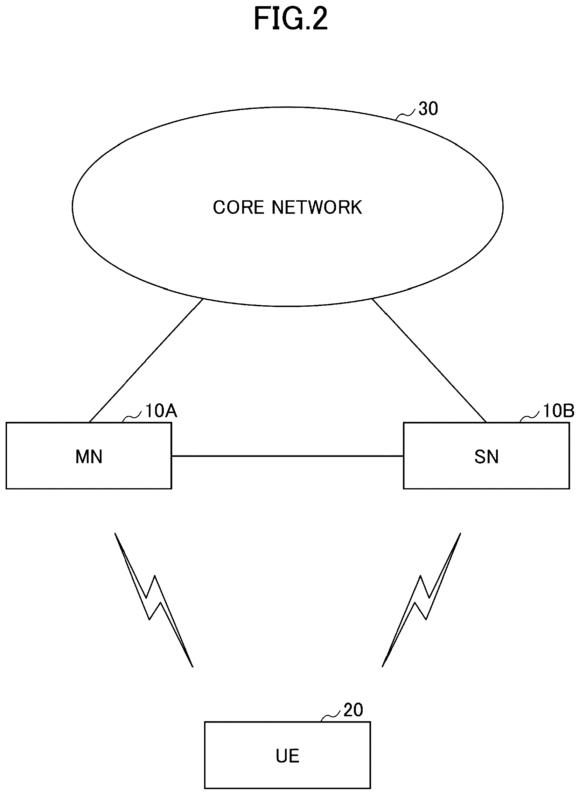

   Fig. 2 is a diagram for illustrating a radio communication system according to an embodiment of the present invention.
[Fig. 3]

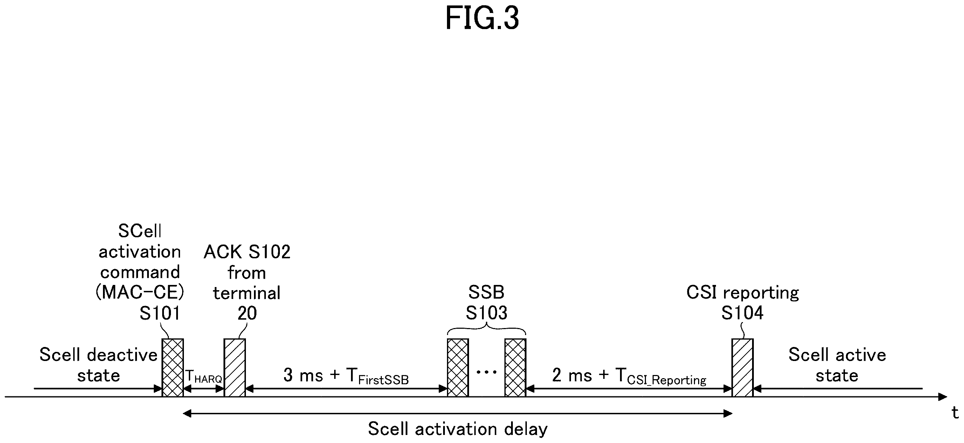

   Fig. 3 is a diagram for illustrating an example of an SCell activation delay.
[Fig. 4]

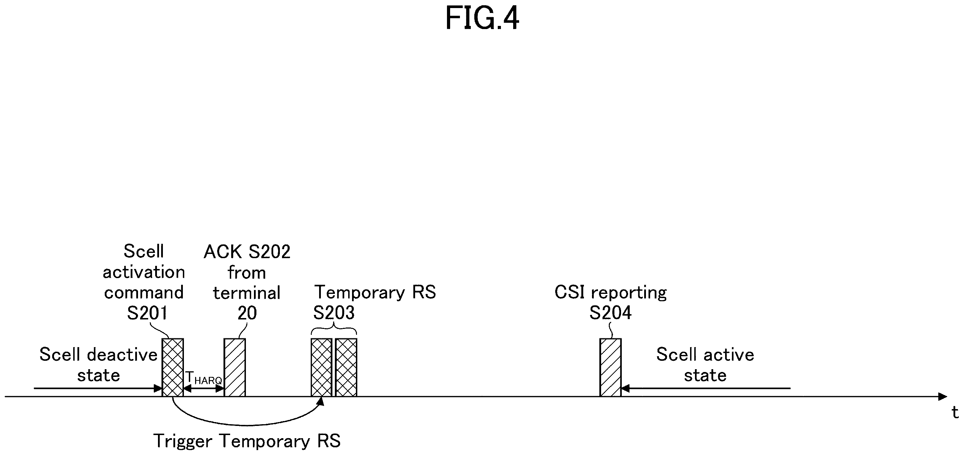

   Fig. 4 is a diagram illustrating an example of an operation of Option 1.
[Fig. 5]

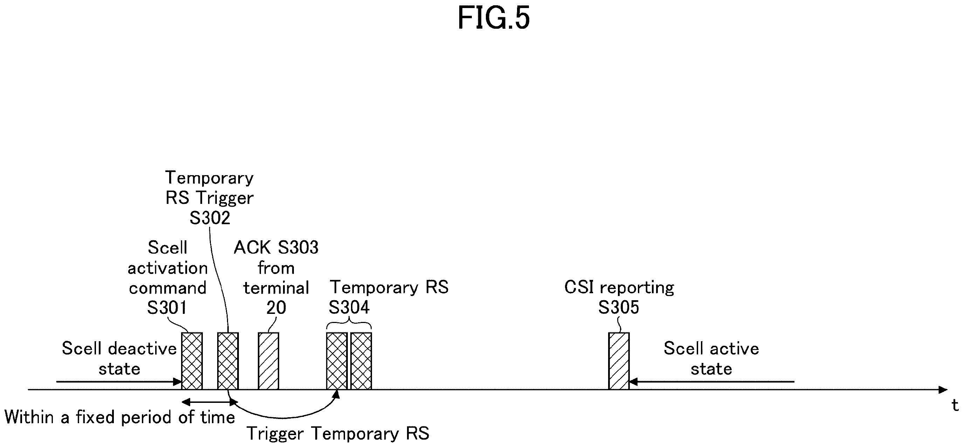

   Fig. 5 is a diagram illustrating an example of an operation of Option 2.
[Fig. 6]

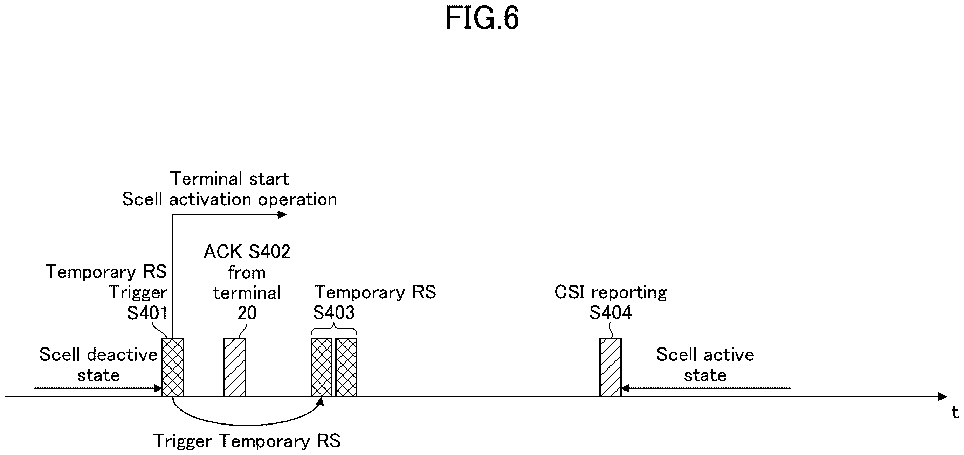

   Fig. 6 is a diagram illustrating an example of an operation of Option 3.
[Fig. 7]

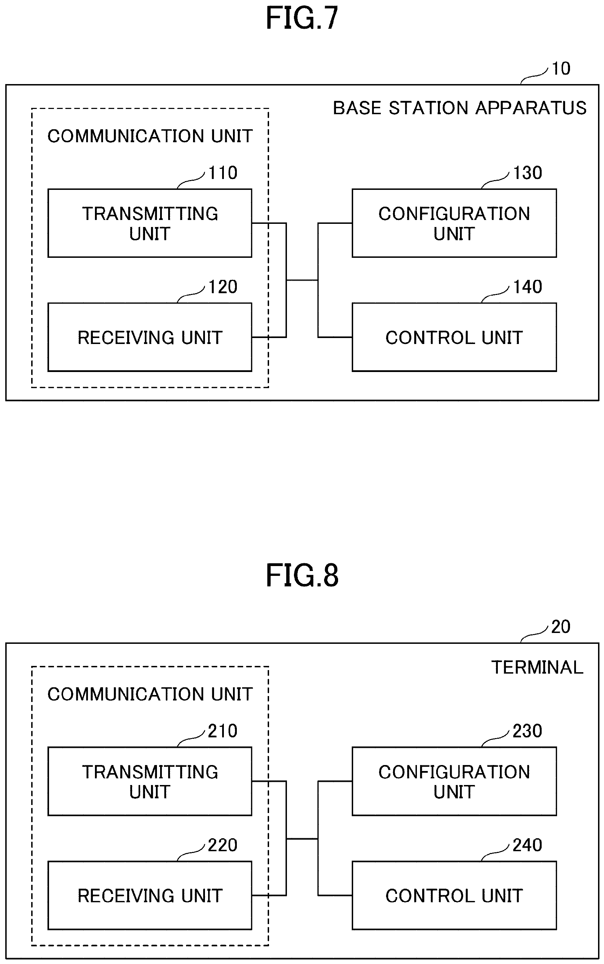

   Fig. 7 is a diagram illustrating an example of a functional configuration of a base station 10 according to an embodiment of the present invention.
[Fig. 8]
   Fig. 8 is a diagram illustrating an example of a functional configuration of the terminal 20 according to an embodiment of the present invention.
[Fig. 9]

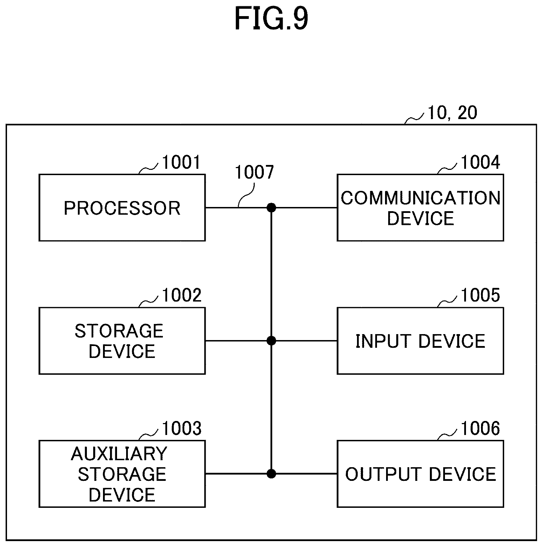

   Fig. 9 is a diagram illustrating an example of a hardware configuration of the base station 10 or the terminal 20 according to an embodiment of the present invention.

### [Description of Embodiments]

In the following, embodiments of the present invention are described with reference to the drawings. Note that, the embodiments described below are examples, and embodiments to which the present invention is applied are not limited to the following embodiments.

In operating a radio communication system according to an embodiment of the present invention, existing technology may be used as appropriate. The existing technology is, for example, an existing NR or LTE, but is not limited to the existing NR or LTE.

### (System Configuration)

Fig. 1 is a diagram illustrating a radio communication system according to an embodiment of the present invention. The radio communication system according to an embodiment of the present invention includes a base station 10 and a terminal 20, as illustrated in Fig. 1. In Fig. 1, one base station 10 and one terminal 20 are illustrated. However, this is an example, and there may be a plurality of base stations 10 and a plurality of terminals 20.

The base station 10 is a communication device that provides one or more cells and performs radio communication with the terminal 20. A physical resource of a radio signal is defined in a time domain and a frequency domain, the time domain may be defined by a number of OFDM symbols, and the frequency domain may be defined by a number of sub-carriers or a number of resource blocks. A Transmission Time Interval (TTI) in the time domain may be a slot, or the TTI may be a subframe.

The base station 10 can perform carrier aggregation in which communication is performed with the terminal 20 by bundling a plurality of cells (a plurality of component carriers (CCs)). For carrier aggregation, one primary cell (PCell) and one or more secondary cells (SCells) are used.

The base station 10 transmits synchronization signals, system information, and the like to the terminal 20. The synchronization signals are, for example, NR-PSS and NR-SSS. System information is transmitted, for example, on NR-PBCH or PDSCH, and is also called broadcast information. As illustrated in Fig. 1, the base station 10 transmits a control signal or data to the terminal 20 via Downlink (DL) and receives a control signal or data from the terminal 20 via Uplink (UL). Here, a signal transmitted on a control channel, such as a PUCCH or a PDCCH, is referred to as a control signal, and a signal transmitted on a shared channel, such as a PUSCH or a PDSCH, is referred to as data. However, such names are examples.

The terminal 20 is a communication device provided with a radio communication function, such as a smartphone, a cellular phone, a tablet, a wearable terminal, or a communication module for Machine-to-Machine (M2M). As illustrated in Fig. 1, the terminal 20 utilizes various types of communication services provided by a radio communication system by receiving control signals or data via DL from the base station 10 and transmitting control signals or data via UL to the base station 10. The terminal 20 may be referred to as a UE, and the base station 10 may be referred to as a gNB.

The terminal 20 can perform carrier aggregation in which communication is performed with the base station 10 by bundling a plurality of cells (a plurality of component carriers (CCs)). For the carrier aggregation, one primary cell (PCell) and one or more secondary cells (SCells) are used. A PUCCH-SCell having a PUCCH may also be used.

Fig. 2 illustrates an example of a configuration of a radio communication system in a case in which Dual connectivity (DC) is executed. As illustrated in Fig. 2, a base station 10A serving as a Master Node (MN) and a base station 10B serving as a Secondary Node (SN) are provided. Each of the base station 10A and the base station 10B is connected to a core network. The terminal 20 can communicate with both the base station 10A and base station 10B.

A cell group provided by the base station 10A that is a MN is called a Master Cell Group (MCG), and a cell group provided by the base station 10B that is an SN is called a Secondary Cell Group (SCG). Furthermore, in DC, a MCG includes one PCell and one or more SCells, and an SCG includes one Primary SCell (PSCell) and one or more SCells.

A processing operation in the embodiments may be executed in the system configuration illustrated in Fig. 1, in the system configuration illustrated in Fig. 2, or in a system configuration other than these system configurations.

The enhancement of the MR-DC/CA (Further Multi-RAT Dual-Connectivity enhancement) is being studied for Release 17 of the 3rd Generation Partnership Project (3GPP).

The study items of the study of the enhancement of the MR-DC/CA include a study on an efficient activation/deactivation mechanism for a secondary cell (SCell) .

In a case where the terminal 20 is performing carrier aggregation, the terminal 20 can deactivate a secondary cell (SCell). In a state in which the secondary cell is deactivated, the terminal 20 does not monitor a PDCCH, and, thus, power consumption can be reduced.

### (Known Cell)

After receiving an indication to activate an SCell, it is necessary for the terminal 20 to perform pre-processing for data transmission and reception. Such pre-processing includes, at least, processing for the terminal 20 to decode the received MAC command, detection of PSS/SSS of the target SCell, time and frequency synchronization processing, and processing for a CSI report.

However, depending on operating and propagation conditions, the terminal 20 may omit performing some of the pre-processing necessary for a connection with the SCell.

For example, it is possible that an L3-RSRP measurement is completed at a timing immediately before receiving an indication to activate an SCell. With such prior information, detection of PSS/SSS of the target SCell may be omitted.

If the terminal 20 holds such prior information on an SCell, the SCell is referred to as a known cell. For FR 1, it is expected that a portion of an SCell activation delay can be shortened if the SCell is a known cell. In the base station 10, scheduling can be performed at an earlier timing after sending the SCell activation command.

### (Known cell condition)

For FR1, conditions are specified under which an SCell can be regarded as a known cell.

An SCell in FR1 is known if the following conditions are met:
- For FR1, for a time period equal to max ([5] measCycleScell, [5] DRX cycles) prior to reception of an activation command, the terminal 20 has transmitted a valid measure report for the SCell to be activated, and a measured SSB remains detectable according to a cell identification condition.
- An SSB measured in a time period equal to max([5] measCycleScell, [5] DRX cycles) prior to reception of an SCell activation command remains detectable during the SCell activation delay, according to the cell identification condition.

In a case other than the above-described case, an SCell in FR1 is unknown.

If the terminal 20 activates an SCell from a deactivated state (in the terminal 20, the SCell transitions to an activated state), a certain time is required to activate the SCell. The time required for the terminal 20 to activate a deactivated SCell may be referred to as an SCell activation delay. For example, if the terminal 20 receives an SCell activation command (Medium Access Control Element (MAC CE)) via a PCell in slot n, the terminal 20 resumes an operation in a state in which the SCell is activated (e.g., CSI reporting operations) for the activated SCell within a time period from slot n until the time T_{HARQ} + T_{activation} _ ₜᵢₘₑ + T_{CSI} _ _{Reporting} elapses from slot n.

Fig. 3 is a diagram illustrating an example of an SCell activation delay. As illustrated in Fig. 3, first, in the terminal 20, the SCell is in a deactivated state. At step S101, the terminal 20 receives an SCell activation command (Medium Access Control Control Element (MAC CE)) from the base station 10, for example, via a PCell.

After receiving the SCell activation command, the terminal 20 transmits a positive acknowledgement (ACK) for the SCell activation command to the base station 10 via the PCell at step S102. Here, as illustrated in Fig. 3, after receiving the SCell activation command, the time until the terminal 20 sends the ACK for the SCell activation command at step S102 may be T_{HARQ}.

Subsequently, the terminal 20 receives a first SSB sent from the SCell at step S103. As illustrated in Fig. 3, the time interval from the transmission of the ACK by the terminal 20 at step S102 until the reception of the first SSB by the terminal 20 at step S103 may be 3 ms + T_{FirstSSB}. Here, 3 ms is the time interval for the terminal 20 to perform MAC CE processing, a preparation of a radio circuit, and the like. The T_{FirstSSB} may be a time interval until a first SSB resource for the terminal 20 is transmitted from the SCell, from a time point that is 3 ms after the terminal 20 transmits the ACK at step S102.

Subsequently, the terminal 20 reports CSI to the SCell at step S104. Subsequently, in the terminal 20, the SCell is in an activated state. As illustrated in Fig. 3, the time interval from the reception of the first SSB transmitted from the SCell by the terminal 20 at step S103 until the CSI reporting to the SCell at step S104 may be 2 ms + T_{CSI _ Reporting}. Here, 2 ms may be a time interval for the terminal 20 to perform SSB processing, AGC setting, and the like. T_{CSI _ Reporting} may include the time interval from 2 ms after the terminal 20 receives the first SSB transmitted from the SCell at step S103 until a CSI measurement resource; the time interval for the terminal 20 to perform a CSI measurement and processing for reporting; and the time interval from a time point at which the terminal 20 completes the CSI measurement and the processing for reporting until the CSI reporting resource.

Note that the SCell activation delay in Fig. 3 is an example, and different SCell activation delays are assumed depending on several conditions, such as whether the SCell is a known cell or an unknown cell. The examples described below may be applied to those different SCell activation delays.

In New Radio (NR), the transmission periodicity of the Synchronization Signal Block (SSB) may be a large value (e.g., 20 ms or 160 ms). In this case, T_{FirstSSB} may be a relatively large value in the SCell activation delay (compared to other time intervals in the SCell activation delay), and, thus, the time interval required for the terminal 20 to complete the SCell activation in the terminal 20 after receiving the SCell activation command may increase.

The time and frequency synchronization, the automatic gain control (AGC) setting, and the like, which are assumed to be performed by the terminal 20 based on the SSB of the SCell, may be performed based on a tracking reference signal (TRS) of the SCell, a CSI-RS of the SCell, or the like, instead of the SSB of the SCell. Accordingly, the terminal 20 may be able to shorten the SCell activation delay by receiving the TRS of the SCell, the CSI-RS of the SCell, or the like at an appropriate timing earlier than the SSB of the SCell. In the following descriptions, the TRS of the SCell and/or the CSI-RS of the SCell, or the like transmitted at the appropriate timing earlier than the SSB of the SCell is referred to as a temporary RS (temporary reference signal). The temporary RS is not limited to the TRS of the SCell and/or the CSI-RS of the SCell, which are transmitted at the appropriate timing earlier than the SSB of SCell, but may be a demodulation reference signal (DMRS) of the SCell, a Phase Tracking Reference Signal (PT-RS) of the SCell, a Positioning Reference Signal (PRS) of the SCell, or the like transmitted at the appropriate timing earlier than the SSB of the SCell.

### (Proposal 1)

The base station 10 may transmit, to the terminal 20, a notification of indication information to activate the SCell and trigger information of a temporary RS by using DCI and/or MAC CE. One or more of the following Option 1 to Option 4 may be supported as a method of transmitting a notification of the indication information to activate the SCell and the trigger information of the temporary RS.

### (Option 1)

Within a single DCI or a single MAC CE, both indication information to activate the SCell and trigger information of the temporary RS may be included.

The trigger information of the temporary RS may include information indicating the time and frequency domain resource position of the temporary RS and the like.

As the method of transmitting the notification of the trigger information of the temporary RS, the existing notification of the aperiodic CSI-RS (as it is or modified one) may be used. Alternatively, a new notification method may be specified as the method of transmitting the notification of the trigger information of the temporary RS.

Fig. 4 is a diagram illustrating an example of an operation of Option 1 described above. As illustrated in Fig. 4, first, the SCell is in a deactivated state in the terminal 20. At step S201, the terminal 20 receives an SCell activation indication from the base station 10, for example, via a PCell. The terminal 20 receives the trigger information of the temporary RS by receiving the SCell activation indication. Accordingly, the terminal 20 identifies the information on the temporary RS (information indicating the time and frequency domain resource location of the temporary RS may be included) transmitted from the secondary cell at a timing after receiving the SCell activation indication, which is the timing after receiving the SCell activation instruction, before the terminal 20 receives the first SSB with respect to time after receiving the indication.

After receiving the SCell activation indication, the terminal 20 transmits a positive acknowledgement (ACK) for the SCell activation indication to the base station 10 via the PCell at step S202.

Subsequently, the terminal 20 receives the temporary RS transmitted from the SCell at step S203, and performs time synchronization and frequency synchronization, automatic gain control (AGC) setting, and the like based on the received temporary RS.

Subsequently, the terminal 20 performs CSI reporting to the SCell at step S204. Subsequently, the SCell is in an activated state in the terminal 20.

In the case of the example in Fig. 4, after receiving the SCell activation indication, the terminal 20 can receive the temporary RS transmitted at the timing earlier than the first transmitted SSB, perform time synchronization and frequency synchronization, automatic gain control (AGC) settings, or the like, and can report CSI to the SCell. Accordingly, the SCell activation delay can be shortened compared to the SCell activation delay in the example illustrated in Fig. 3

### (Option 2)

A notification of the indication information to activate the SCell may be transmitted by using a DCI and a notification of the trigger information of the temporary RS may be transmitted by using another DCI. A notification of the indication information to activate the SCell may be transmitted by using a MAC CE and a notification of the trigger information of the temporary RS may be transmitted by using another MAC CE. A notification of the indication information to activate the SCell may be transmitted by using a DCI and a notification of the trigger information of the temporary RS may be transmitted by using a MAC CE. A notification of the indication information to activate the SCell may be transmitted by using a MAC CE and a notification of the trigger information of the temporary RS may be transmitted by using a DCI.

Note that the trigger information of the temporary RS may include information indicating the location of the time and frequency domain resource of the temporary RS and the like.

As a method of transmitting a notification of the trigger information of the temporary RS, the existing aperiodic CSI-RS trigger notification (as it is or modified) may be used. Alternatively, a new notification method may be specified as a method of transmitting a notification of the trigger information of the temporary RS.

### (Option 2-1)

When the terminal 20 receives the indication information for activating the SCell and the trigger information of the temporary RS within a fixed period of time, the terminal 20 may activate the SCell by using the temporary RS.

The base station 10 may transmit, to the terminal 20, a notification of the "fixed period of time" by using RRC signaling or the like. The "fixed period of time" may also be specified in a technical specification. For example, the "fixed period of time" may be one slot or X slots (X > 1). The "fixed period of time" may be Y ms. For example, Y ms may be determined based on the transmission periodicity of the SSB. For example, if the transmission periodicity of the SSB is Z ms, Y < Z/N may be satisfied, where (N> 1). Furthermore, based on the location of the next SSB assumed by the terminal, the end timing of the "fixed period of time" may be notified or specified. For example, the end timing of the "fixed period of time" may be X slots before or Y ms before the time location of the next SSB assumed by the terminal. Alternatively, the end timing of the "fixed period of time" may be notified or specified based on the location of the next TRS (e.g. periodic TRS) assumed by the terminal. For example, the end timing of the "fixed period of time" may be X slots before or Y ms before the time location of the next TRS assumed by the terminal.

If the terminal 20 receives the trigger information of the temporary RS within the fixed period of time from the timing of receiving the indication information to activate the SCell, the terminal 20 may activate the SCell by using the temporary RS. Alternatively, if the terminal 20 receives the indication information to activate the SCell within the fixed period of time from the timing of receiving the trigger information of the temporary RS, the terminal 20 may activate the SCell by using the temporary RS.

### (Option 2-2)

The base station 10 may transmit a notification of the indication information to activate the SCell while including, in the indication information, the information indicating whether the trigger information of the temporary RS is to be transmitted after the transmission of the indication information to activate the SCell. If the terminal 20 receives the indication information to activate the SCell, the terminal 20 may assume whether to receive the trigger information of the temporary RS based on the information included in the indication information to activate the SCell indicating whether the trigger information of the temporary RS is to be transmitted after the transmission of the indication information to activate the SCell. If the information indicating that the trigger information of the temporary RS is to be transmitted after the transmission of the indication information to activate the SCell is included in the indication information to activate the SCell, the terminal 20 may attempt to receive the trigger information of the temporary RS, and, if the trigger information of the temporary RS is not received for the fixed period of time after the reception of the indication information to activate the SCell, the terminal 20 may perform a normal operation to activate the SCell. The normal operation to activate the SCell may be, for example, an operation to activate by using an SSB.

Fig. 5 is a diagram illustrating an example of the operation of Option 2 described above. As illustrated in Fig. 5, first, in the terminal 20, the SCell is in a deactivated state. At step S301, the terminal 20 receives an SCell activation indication from the base station 10, for example, via the PCell. At step S302, the terminal 20 receives the trigger information of the temporary RS within the fixed period of time after receiving the SCell activation indication at step S301. Accordingly, the terminal 20 identifies the information on the temporary RS transmitted from the secondary cell (information indicating the time and frequency domain resource location of the temporary RS may be included) at the timing after receiving the SCell activation indication, which is the timing after receiving the SCell activation indication before the terminal 20 receives the first SSB with respect to time after receiving the command.

After receiving the SCell activation indication, the terminal 20 transmits a positive acknowledgement (ACK) for the SCell activation indication to the base station 10 via the PCell at step S303.

Subsequently, the terminal 20 receives the temporary RS transmitted from the SCell at step S304, and performs time synchronization and frequency synchronization, automatic gain control (AGC) setting, and the like based on the received temporary RS.

Subsequently, the terminal 20 performs CSI reporting to the SCell at step S305. Subsequently, the SCell is in the activated state in the terminal 20.

In the case of the example in Fig. 5, after receiving the SCell activation indication, the terminal 20 can receive the temporary RS transmitted at the timing earlier than the first transmitted SSB; perform time synchronization and frequency synchronization, automatic gain control (AGC) setting, and the like; and report CSI to the SCell. Accordingly, the SCell activation delay can be shortened compared to the SCell activation delay in the example illustrated in Fig. 3.

Note that, in the example of Fig. 5, the terminal 20 transmits a positive acknowledgement (ACK) for the SCell activation indication to the base station 10 via the PCell at S303. However, examples of the present invention are not limited to this example.

For example, a single ACK transmission timing for the reception of the SCell activation indication and the reception of the trigger information of the temporary RS may be specified or notified, while using the timing of the reception of the SCell activation indication as the start point. The single ACK transmitted by the terminal 20 may include information indicating that the ACK is for the reception of the SCell activation indication and the reception of the trigger information of the temporary RS.

For example, a single ACK transmission timing for the reception of the SCell activation indication and the reception of the trigger information of the temporary RS may be specified or notified, while using the timing of the reception of the trigger information of the temporary RS as the start point. The single ACK transmitted by the terminal 20 may include information indicating that the ACK is for the reception of the SCell activation indication and the reception of the trigger information of the temporary RS.

For example, as for the reception of the SCell activation indication, a single ACK for the reception of the SCell activation indication may be transmitted, while using the timing of the reception of the SCell activation indication as the start point, and, as for the reception of the trigger information of the temporary RS, a single ACK for the reception of the trigger information of the temporary RS may be transmitted, while using the timing of the reception of the trigger information of the temporary RS as the start point (i.e., separate ACKs may be transmitted for the reception of the SCell activation indication and the reception of the trigger information of the temporary RS).

### (Option 3)

Upon receiving a notification of the trigger information of the temporary RS in a DCI and/or a MAC CE, the terminal 20 may implicitly determine that a notification of the indication information to activate the SCell is transmitted by the trigger information of the temporary RS.

The trigger information of the temporary RS may include information indicating the time and frequency domain resource location of the temporary RS and the like.

As a method of transmitting a notification of the trigger information of the temporary RS, the existing aperiodic CSI-RS trigger notification (as it is or modified) may be used. Alternatively, a new notification method may be specified as a method for transmitting the notification of the trigger information of the temporary RS.

Fig. 6 is a diagram illustrating an example of the operation of Option 3 described above. As illustrated in Fig. 6, first, the SCell is in a deactivated state in the terminal 20. At step S401, the terminal 20 receives the trigger information of the temporary RS from the base station 10, for example, via the PCell. In response to receiving the trigger information of the temporary RS, the terminal 20 starts the operation to activate the SCell at step S401. Based on the trigger information of the temporary RS, the terminal 20 identifies the information on the temporary RS transmitted from the secondary cell (information indicating the time and frequency domain resource location of the temporary RS may be included) at the timing after receiving the trigger information of the temporary RS, which is the timing after receiving the trigger information of the temporary RS before the terminal 20 receives the first SSB with respect to time after receiving the information.

After receiving the trigger information of the temporary RS, the terminal 20 transmits a positive acknowledgement (ACK) for the SCell activation indication or the temporary RS trigger notification to the base station 10 via the PCell at step S402.

Subsequently, at step S404, the terminal 20 receives the temporary RS transmitted from the SCell and performs time synchronization and frequency synchronization, automatic gain control (AGC) setting, and the like based on the received temporary RS.

Subsequently, at step S405, the terminal 20 performs CSI reporting to the SCell. Subsequently, in the terminal 20, the SCell is in the activated state.

In the case of the example of Fig. 6, after receiving the trigger information of the temporary RS, the terminal 20 can receive the temporary RS transmitted at the timing earlier than the first SSB; perform time synchronization and frequency synchronization, automatic gain control (AGC) setting, and the like; and report CSI to the SCell. Accordingly, the SCell activation delay can be shortened compared to the SCell activation delay in the example illustrated in Fig. 3.

### (Option 4)

If a notification of normal indication information to activate the SCell is transmitted in a MAC CE, the terminal 20 may perform a normal operation to activate the SCell while assuming that a notification of trigger information of a temporary RS is not to be transmitted (the temporary RS is not available). Note that Option 3 and Option 4 may be combined. Namely, if a notification of the trigger information of the temporary RS is transmitted in a DCI and/or a MAC CE, the terminal may implicitly determine that a notification of the indication information to activate the SCell is transmitted by the trigger information of the temporary RS. If a notification of trigger information of a temporary RS is not transmitted and a notification of the normal indication information to activate the SCell is transmitted in the MAC CE, the terminal 20 may determine that a notification of trigger information of a temporary RS is not to be transmitted. For example, even if the terminal is configured with a higher layer signaling for an SCell activation operation using a temporary RS, if a notification of usual indication information to activate the SCell is transmitted in a MAC CE, a normal operation to activate the SCell may be performed while assuming that a notification of trigger information of a temporary RS is not to be transmitted (the temporary RS is not available).

### (Proposal 2)

The base station 10 may transmit, to the terminal 20, a notification of indications to activate multiple SCells and/or trigger information of temporary RSs of the multiple SCells by using indication information to activate an SCell and/or trigger information of a temporary RS.

### (Option 1 of Proposal 2)

The base station 10 may include, in the indication information to activate the SCell and/or the trigger information of the temporary RS, one or more indexes of one or more SCells indicating the one or more SCells to be activated or one or more indexes for a SCell group indicating multiple SCells to be activated. For example, if SCell #1 and SCell #2 are to be activated, the base station 10 may include index #1 indicating SCell #1 and index #2 indicating SCell #2 in indication information to activate an SCell.

### (Option 2 of Proposal 2)

The terminal 20 may identify an index of an SCell to be activated or an index for an SCell group based on specific information included in the indication information to activate the SCell and/or trigger information of a temporary RS, a timing of receiving the indication information to activate the SCell and/or the trigger information of the temporary RS, or the like. For example, correspondence between a resource location in the time and frequency domain of a temporary RS and an index of a specific SCell from among multiple SCells may be predefined. In this case, the terminal 20 may identify the SCell to be activated based on the resource location in the time and frequency domain of the temporary RS included in the received trigger information of the temporary RS.

### (Option 3 of Proposal 2)

The base station 10 may include, in indication information to activate an SCell and/or trigger information of a temporary RS, indication information to activate or deactivate for each SCell of multiple SCells. Furthermore, the base station 10 may include, in indication information to activate an SCell and/or trigger information of a temporary RS, indication information to activate or deactivate for each SCell group of multiple SCell groups. Namely, information indicating to activate or deactivate may be collectively transmitted to SCells including an SCell without a change, in addition to an SCell with a change in the activation/deactivation status. For example, a notification of activation/deactivation status may always be included for all SCells from among multiple SCells or for all SCell groups from among multiple SCell groups. Alternatively, a maximum number of SCells or a maximum number of SCell groups included in a notification may be notified or specified.

For example, the base station 10 may switch between transmitting a notification on a per SCell basis and transmitting a notification on a per SCell group basis, depending on the number of SCells. According to this method, the number of bits for notification can be fixed regardless of the number of SCells. For example, a notification may be based on a bitmap-format for multiple SCells or multiple SCell groups. For example, the SCell dormancy indication field may be used without changing the field or with a modification of the field.

In Proposal 2, the base station 10 may preconfigure the SCell groups for the terminal 20 or transmit a notification of the SCell groups in advance to the terminal 20. For example, the same SCell group as the SCell group used for an SCell dormancy indication may be used, or another SCell group may be configured/notified.

The terminal 20 may include, in the terminal capability information (UE Capability), information indicating that the terminal 20 supports the functions of Option 1 to Option 3 of Proposal 1 and/or Option 1 to Option 3 of Proposal 2 described above and transmit the terminal capability information to the base station 10. Only if the terminal 20 is configured with higher layer signaling related to this proposal (e.g., higher layer signaling for a temporary RS), the proposal according to this specification may be applied and the SCell activation operation by using the temporary RS may be enabled. If the terminal 20 is not configured with higher layer signaling related to this proposal (e.g., higher layer signaling for a temporary RS), the usual SCell activation operation (e.g., the SCell activation operation by using the SSB) may be executed.

### (Device configuration)

Next, an example of functional configurations of the base station 10 and the terminal 20 is described, which are for performing the process and the operation described above. The base station 10 and the terminal 20 include functions for implementing the above-described embodiments. However, each of the base station 10 and the terminal 20 may only include a proposed function of the embodiments.

### <Base station 10>

Fig. 7 is a diagram illustrating an example of a functional configuration of the base station 10. As illustrated in Fig. 7, the base station 10 includes a transmitting unit 110; a receiving unit 120; a configuration unit 130; and a control unit 140. The functional configuration illustrated in Fig. 7 is merely an example. The functional division and the names of the functional units may be any division and names, provided that the operation according to the embodiments of the present invention can be executed. The transmitting unit 110 and the receiving unit 120 may be referred to as a communication unit.

The transmitting unit 110 includes a function for generating a signal to be transmitted to the terminal 20 and transmitting the signal through radio. The receiving unit 120 includes a function for receiving various signals transmitted from the terminal 20 and retrieving, for example, information of a higher layer from the received signals. The transmitting unit 110 is provided with a function to transmit NR-PSS, NR-SSS, NR-PBCH, DL/UL control signals, DL data, and the like, to the terminal 20. Furthermore, the transmitting unit 110 transmits configuration information or the like described in Proposals 1 and 2.

The configuration unit 130 stores, in a storage device, preconfigured configuration information and various types of configuration information to be transmitted to the terminal 20, and reads out the information from the storage device, if necessary. The control unit 140 performs resource assignment, control of the entire base station 10, and the like. The functional unit related to signal transmission in the control unit 140 may be included in the transmitting unit 110, and the functional unit related to signal reception in the control unit 140 may be included in the receiving unit 120. Furthermore, the transmitting unit 110 may be referred to as a transmitter, and the receiving unit 120 may be referred to as a receiver.

### <Terminal 20>

FIG. 8 is a diagram illustrating an example of a functional configuration of the terminal 20. As illustrated in FIG. 8, the terminal 20 includes a transmitting unit 210; a receiving unit 220; a configuration unit 230; and a control unit 240. The functional configuration illustrated in FIG. 8 is merely an example. The functional division and the names of the functional units may be any division and names, provided that the operation according to the embodiments of the present invention can be executed. The transmitting unit 210 and the receiving unit 220 may be referred to as a communication unit.

The transmitting unit 210 creates a transmission signal from transmission data and transmits the transmission signal through radio. The receiving unit 220 receives various signals through radio and retrieves higher layer signals from the received physical layer signals.

The configuration unit 230 stores, in a storage device, various types of configuration information received by the receiving unit 220 from the base station 10, and reads out the information from the storage device, if necessary. Furthermore, the configuration unit 230 stores preconfigured configuration information. The control unit 240 performs control or the like of the entire terminal 20. A functional unit related to signal transmission in the control unit 240 may be included in the transmitting unit 210, and a functional unit related to signal reception in the control unit 240 may be included in the receiving unit 220. Furthermore, the transmitting unit 210 may be referred to as a transmitter, and the receiving unit 220 may be referred to as a receiver.

In the embodiments, at least, the terminal, the communication method, and the base station below are described.
(Item 1) A terminal including
   a receiving unit that receives information indicating activation of a secondary cell;
   a control unit that activates the secondary cell based on the information received by the receiving unit and a temporary reference signal transmitted via the secondary cell, the temporary reference signal being transmitted at a timing after the reception of the information, the timing after the reception of the information being prior to receiving a first synchronization signal block with respect to time via the secondary cell; and
   a transmitting unit that reports channel state information based on the temporary reference signal.
(Item 2) The terminal according to item 1, wherein, if the receiving unit receives the information indicating the activation of the secondary cell and trigger information of the temporary reference signal within a fixed period of time, the control unit activates the secondary cell based on the temporary reference signal.
(Item 3) The terminal according to item 1, wherein, if the receiving unit does not receive the information indicating the activation of the secondary cell and trigger information of the temporary reference signal within a fixed period of time, the control unit activates the secondary cell based on the synchronization signal block.
(Item 4) The terminal according to item 1, wherein the information indicating the activation of the secondary cell is trigger information of the temporary reference signal.
(Item 5) A communication method executed by a terminal, the method including:
   receiving information indicating activation of a secondary cell;
   activating the secondary cell based on the received information and a temporary reference signal transmitted via the secondary cell, the temporary reference signal being transmitted at a timing after the reception of the information, the timing after the reception of the information being prior to receiving a first synchronization signal block with respect to time via the secondary cell; and
   reporting channel state information based on the temporary reference signal.
(Item 6) A base station including
   a transmitting unit that transmits, to a terminal, information indicating activation of a secondary cell;
   a control unit that determines that the terminal activates the secondary cell based on the information transmitted by the transmitting unit and a temporary reference signal transmitted via the secondary cell, the temporary reference signal being transmitted at a timing after the transmission of the information, the timing after the transmission of the information being prior to transmitting a first synchronization signal block with respect to time via the secondary cell; and
   a receiving unit that receives a channel state information report based on the temporary reference signal.

By the configuration described in any of the above-described items, a technique is provided with which an SCell activation delay can be shortened.

### (Hardware configuration)

The block diagrams (FIG. 7 and FIG. 8) used for the description of the above embodiments illustrate blocks of functional units. These functional blocks (components) are implemented by any combination of at least one of hardware and software. In addition, the implementation method of each functional block is not particularly limited. That is, each functional block may be implemented using a single device that is physically or logically combined, or may be implemented by directly or indirectly connecting two or more devices that are physically or logically separated (e.g., using wire or radio) and using these multiple devices. The functional block may be implemented by combining software with the above-described one device or the above-described plurality of devices.

Functions include, but are not limited to, judgment, decision, determination, computation, calculation, processing, derivation, research, search, verification, reception, transmission, output, access, resolution, choice, selection, establishment, comparison, assumption, expectation, deeming, broadcasting, notifying, communicating, forwarding, configuring, reconfiguring, allocating, mapping, assigning, and the like. For example, a functional block (component) that functions to transmit is called a transmitting unit or a transmitter. In either case, as described above, the implementation method is not particularly limited.

For example, the base station 10, the terminal 20, or the like in an embodiment of the present disclosure may function as a computer for performing a process of the radio communication method according to the present disclosure. Fig. 9 is a diagram illustrating an example of a hardware configuration of the base station 10 and the terminal 20 according to an embodiment of the present disclosure. Each of the base station 10 and the terminal 20 described above may be physically configured as a computer device including a processor 1001, a storage device 1002, an auxiliary storage device 1003, a communication device 1004, an input device 1005, an output device 1006, a bus 1007, and the like.

In the following description, the term "device" can be replaced with a circuit, device, unit, or the like. The hardware configuration of each of the base station 10 and the terminal 20 may be configured to include each device depicted, or may be configured without including some devices.

Each function in each of the base station 10 and the terminal 20 is implemented such that predetermined software (program) is read on hardware, such as the processor 1001, the storage device 1002, and the like, and the processor 1001 performs an operation and controls communication by the communication device 1004 and at least one of reading and writing of data in the storage device 1002 and the auxiliary storage device 1003.

For example, the processor 1001 operates an operating system and controls the entire computer. The processor 1001 may be configured with a Central Processing Unit (CPU) including an interface with a peripheral device, a control device, an operation device, a register, and the like. For example, the above-described control unit 140, the control unit 240, and the like may be implemented by the processor 1001.

Furthermore, the processor 1001 reads a program (program code), a software module, data, or the like from at least one of the auxiliary storage device 1003 and the communication device 1004 out to the storage device 1002, and executes various types of processes according to them. A program causing a computer to execute at least some of the operations described in the above embodiments is used as the program. For example, the control unit 140 of the base station 10 illustrated in FIG. 6 may be implemented by a control program which is stored in the storage device 1002 and operates on the processor 1001. Furthermore, for example, the control unit 240 of the terminal 20 illustrated in Fig. 7 may be implemented by a control program which is stored in the storage device 1002 and operates on the processor 1001. Various types of processes are described to be executed by one processor 1001 but may be executed simultaneously or sequentially by two or more processors 1001. The processor 1001 may be implemented by one or more chips. The program may be transmitted from a network via an electric communication line.

The storage device 1002 is a computer readable recording medium and may be configured with, for example, at least one of a Read Only Memory (ROM), an Erasable Programmable ROM (EPROM), an Electrically Erasable Programmable ROM (EEPROM), a Random Access Memory (RAM), and the like. The storage device 1002 may also be referred to as a "register," a "cache," a "main memory," or the like. The storage device 1002 can store programs (program codes), software modules, or the like which are executable for carrying out the communication method according to an embodiment of the present disclosure.

The auxiliary storage device 1003 is a computer-readable recording medium and may be configured with, for example, at least one of an optical disk such as a Compact Disc ROM (CD-ROM), a hard disk drive, a flexible disk, a magneto-optical disk (for example, a compact disk, a digital versatile disk, or a Blu-ray (registered trademark) disc, a smart card, a flash memory (for example, a card, a stick, or a key drive), a floppy (registered trademark) disk, a magnetic strip, and the like. The above-described auxiliary storage device 1003 may be referred to as a secondary storage. The above-described storage medium may be, for example, a database, a server, or any other appropriate medium including at least one of the storage device 1002 and the auxiliary storage device 1003.

The communication device 1004 is hardware (a transmitting and receiving device) for performing communication between computers via at least one of a wired network and a wireless network and is also referred to as, for example, a "network device," a "network controller," a "network card," a "communication module," or the like. The communication device 1004 may be configured to include a high frequency switch, a duplexer, a filter, a frequency synthesizer, and the like to implement at least one of frequency division duplex (FDD: Frequency Division Duplex) and time division duplex (TDD: Time Division Duplex). For example, transmitting and receiving antennas, an amplifier, a transceiver, a transmission line interface, and the like may be implemented by the communication device 1004. The transceiver may be implemented such that a transmitter and a receiver are physically or logically separated.

The input device 1005 is an input device that receives an input from the outside (such as a keyboard, a mouse, a microphone, a switch, a button, a sensor, or the like). The output device 1006 is an output device that performs an output to the outside (for example, a display, a speaker, an LED lamp, or the like). The input device 1005 and the output device 1006 may be integrally formed (such as a touch panel).

The devices, such as the processor 1001 and the storage device 1002, are connected by the bus 1007 for communicating information. The bus 1007 may be configured with a single bus or may be configured with different buses between the devices.

Furthermore, each of the base station 10 and the terminal 20 may be configured to include hardware, such as a microprocessor, a digital signal processor (DSP: Digital Signal Processor), an Application Specific Integrated Circuit (ASIC), a Programmable Logic Device (PLD), or a Field Programmable Gate Array (FPGA), or all or some of the functional blocks may be implemented by the hardware. For example, the processor 1001 may be implemented by at least one of these hardware components.

### (Supplemental embodiment)

The exemplary embodiments of the present invention are described above, but the disclosed invention is not limited to the above embodiments, and those skilled in the art would understand various modified examples, revised examples, alternative examples, substitution examples, and the like. In order to facilitate understanding of the invention, specific numerical value examples are used for description, but the numerical values are merely examples, and certain suitable values may be used unless otherwise stated. The classification of items in the above description is not essential to the present invention. Matters described in two or more items may be combined and used if necessary, and a matter described in one item may be applied to a matter described in another item (as long as there is no contradiction). The boundary between functional units or processing units in a functional block diagram does not necessarily correspond to the boundary between physical parts. Operations of a plurality of functional units may be performed physically by one component, or an operation of one functional unit may be physically performed by a plurality of parts. In the processing procedure described in the embodiments, the order of the processes may be changed as long as there is no contradiction. For the sake of convenience of processing description, the base station 10 and the terminal 20 are described using the functional block diagrams, but such devices may be implemented by hardware, software, or a combination thereof. Software executed by the processor included in the base station 10 according to the embodiment of the present invention and software executed by the processor included in the terminal 20 according to the embodiment of the present invention may be stored in a random access memory (RAM), a flash memory, a read-only memory (ROM), an EPROM, an EEPROM, a register, a hard disk (HDD), a removable disk, a CD-ROM, a database, a server, or any other appropriate storage medium.

Furthermore, a notification of information is not limited to the aspects or embodiments described in the present disclosure and may be provided by using any other method. For example, the notification of information may be provided by physical layer signalling (for example, Downlink Control Information (DCI) or Uplink Control Information (UCI)), higher layer signaling (for example, Radio Resource Control (RRC) signaling, Medium Access Control (MAC) signaling, broadcast information (Master Information Block (MIB), System Information Block (SIB)), other signals, or a combination thereof. Furthermore, the RRC signaling may be referred to as an RRC message and may be, for example, an RRC Connection Setup message, an RRC Connection Reconfiguration message, or the like.

Each aspect and embodiment described in the present disclosure may be applied to at least one of Long Term Evolution (LTE), LTE-advanced (LTE-A), SUPER 3G, IMT-advanced, 4th generation mobile communication system (4G), 5th generation mobile communication system (5G), Future Radio Access (FRA), new Radio (NR), W-CDMA (registered trademark), GSM (registered trademark), CDMA 2000, Ultra Mobile Broadband (UMB), IEEE 802.11 (Wi-Fi(registered trademark)), IEEE 802.16 (WiMAX(registered trademark)), IEEE 802.20, Ultra-WideBand (UWB), Bluetooth (registered trademark), a system using any other appropriate system, and next generation systems extended based on these standards. Furthermore, a plurality of systems (e.g., a combination of at least one of LTE and LTE-A with 5G) may be combined to be applied.

The order of the processing procedures, the order of the sequences, the order of the flowcharts, and the like of the respective aspects/embodiments described in this specification may be changed, provided that there is no contradiction. For example, the method described in the present disclosure presents elements of various steps with an exemplary order and is not limited to a presented specific order.

In this specification, a specific operation to be performed by the base station 10 may be performed by an upper node in some cases. In the network including one or more network nodes including the base station 10, various operations performed for communication with the terminal 20 can be obviously performed by at least one of the base station 10 and any network node (for example, an MME, an S-GW, or the like is considered, but it is not limited thereto) other than the base station 10. A case is exemplified above in which there is one network node other than the base station 10. The one network node may be a combination of a plurality of other network nodes (e.g., MME and S-GW).

Information, a signal, or the like described in the present disclosure may be output from a higher layer (or a lower layer) to a lower layer (or a higher layer). Information, a signal, or the like described in the present disclosure may be input and output via a plurality of network nodes.

Input and output information and the like may be stored in a specific place (for example, a memory) or may be managed by using a management table. Input and output information and the like may be overwritten, updated, or additionally written. Output information and the like may be deleted. Input information and the like may be transmitted to another device.

The determination in the present disclosure may be made in accordance with a value (0 or 1) indicated by one bit, may be made in accordance with a Boolean value (Boolean: true or false), or may be made by a comparison of numerical values (for example, a comparison with a predetermined value).

Software should be broadly interpreted to mean a command, a command set, a code, a code segment, a program code, a program, a subprogram, a software module, an application, a software application, a software package, a routine, a subroutine, an object, an executable file, an execution thread, a procedure, a function, and the like regardless of whether software is called software, firmware, middleware, a microcode, a hardware description language, or any other name.

Furthermore, software, commands, information, and the like may be transmitted and received via a transmission medium. For example, when software is transmitted from a web site, a server, or any other remote source using a wired technology (such as a coaxial cable, a fiber optic cable, a twisted pair, or a digital subscriber line (DSL: Digital Subscriber Line)) and a radio technology (such as infrared rays or a microwave), at least one of the wired technology and the radio technology is included in a definition of a transmission medium.

Information, signals, and the like described in the present disclosure may be expressed using any one of a variety of different techniques. For example, data, instructions, commands, information, signals, bits, symbols, chips, and the like which are mentioned throughout the above description may be expressed by voltages, currents, electromagnetic waves, magnetic fields or magnetic particles, optical fields or photons, or any combination thereof.

The terms described in the present disclosure and terms necessary for understanding the present disclosure may be replaced with terms having the same or similar meanings. For example, at least one of a channel and a symbol may be a signal (signalling). Furthermore, a signal may be a message. Furthermore, a component carrier (CC: Component Carrier) may be referred to as a "carrier frequency," a "cell," a "frequency carrier," or the like.

The terms "system" and "network" used in the present disclosure are used interchangeably.

Furthermore, information, parameters, and the like described in the present disclosure may be expressed by using absolute values, may be expressed by using relative values from predetermined values, or may be expressed by using any other corresponding information. For example, radio resources may be those indicated by an index.

The names used for the above-described parameters are not limited names in any point of view. Furthermore, mathematical formulas or the like using the parameters may be different from those explicitly disclosed in the present disclosure. Since various channels (for example, a PUSCH, a PUCCH, a PDCCH, and the like) and information elements can be identified by any suitable names, various names assigned to the various channels and the information elements are not limited names in any point of view.

In the present disclosure, the terms "base station (BS: Base Station)," "radio base station," "base station," "fixed station," "Node B," "eNode B (eNB)," "gNodeB (gNB)," "access point," "transmission point," "reception point," "transmission/reception point," "cell," "sector," "cell group," "carrier," "component carrier," and the like can be used interchangeably. The base station may also be referred to by a term, such as a macrocell, a small cell, a femtocell, and a picocell.

The base station can accommodate one or more (for example, three) cells. In a case in which the base station accommodates a plurality of cells, the entire coverage area of the base station can be partitioned into a plurality of small areas, and each small area can provide a communication service through a base station subsystem (for example, a small indoor base station (RRH: Remote Radio Head)). The term "cell" or "sector" refers to the whole or a part of the coverage area of at least one of the base station and the base station subsystem that performs a communication service in the coverage.

In the present disclosure, the terms "mobile station (MS: Mobile Station)," "terminal (user terminal)," "terminal (UE: User Equipment)," "terminal," and the like can be used interchangeably.

The mobile station may be referred to, by a person ordinarily skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a terminal, a wireless terminal, a remote terminal, a handset, a user agent, a mobile client, a client, or some other suitable terms.

At least one of the base station and the mobile station may be also referred to as a transmitting device, a receiving device, a communication device, or the like. At least one of the base station and the mobile station may be a device installed in a mobile body, a mobile body itself, or the like. The mobile body may be a vehicle (for example, a car, an airplane, or the like), an unmanned body that moves (for example, a drone, an autonomous car or the like), or a robot (manned type or unmanned type). At least one of the base station and the mobile station includes a device that need not move during a communication operation. For example, at least one of the base station and the mobile station may be an Internet of Things (IoT) device such as a sensor.

Furthermore, the base station in the present disclosure may be replaced with a terminal. For example, each aspect/embodiment of the present disclosure may be applied to a configuration in which communication between the base station and the terminal is replaced with communication between a plurality of terminals 20 (for example, which may be referred to as Device-to-Device (D2D) or Vehicle-to-Everything (V2X)). In this case, the terminal 20 may have the functions of the base station 10 described above. Furthermore, the terms "uplink" and "downlink" may be replaced with terms (for example, "side") corresponding to inter-terminal communication. For example, an uplink channel, a downlink channel, or the like may be replaced with side channels.

Similarly, the terminal in the present disclosure may be replaced with the base station. In this case, the base station may have the functions of the above-described terminal.

The terms "determination(determining)" and "decision (determining)" used in the present specification may include various types of operations. The "determination" and "decision" may include deeming "judging," "calculating," "computing," "processing," "deriving," "investigating," "looking up (for example, searching in a table, a database, or another data structure)," or "ascertaining" as "determining" and/or "deciding." Furthermore, the "determination" and "decision" may include deeming "receiving (for example, receiving information)," "transmitting (for example, transmitting information)," "inputting," "outputting," or "accessing (for example, accessing data in a memory)" as "determining" and/or "deciding." Furthermore, the "determination" and "decision" may include deeming "resolving," "selecting," "choosing," "establishing," or "comparing" as "determining" and/or "deciding." Namely, the "determination" and "decision" may include deeming an operation as "determining" and/or "deciding." Furthermore, "determining" may be replaced with "assuming," "expecting," "considering," or the like.

Terms "connected," "coupled," or variations thereof means any direct or indirect connection or coupling between two or more elements and may include the presence of one or more intermediate elements between two elements which are "connected" or "coupled." The coupling or the connection between the elements may be physical, logical, or a combination thereof. For example, "connection" may be replaced with "access." In a case of using in the present disclosure, two elements may be considered to be "connected" or "coupled" with each other using at least one of one or more electric wires, cables and/or a printed electrical connection or using electromagnetic energy having a wavelength in a radio frequency domain, a microwave region, or a light (both visible and invisible) region as nonlimiting and non-exhaustive examples.

A reference signal may be abbreviated as RS (Reference Signal) and may be referred to as a pilot, depending on a standard to be applied.

A phrase "based on" used in the present disclosure is not limited to "based only on" unless otherwise stated. In other words, a phrase "based on" means both "based only on" and "based on at least."

Any reference to an element using a designation, such as "first" or "second," used in the present disclosure does not generally restrict quantities or an order of those elements. Such designations can be used in the present disclosure as a convenient method of distinguishing two or more elements. Thus, reference to the first and second elements does not mean that only two elements can be adopted there, or the first element must precede the second element in a certain form.

Furthermore, "means" in the configuration of each of the above devices may be replaced with "unit," "circuit," "device," or the like.

When "include," "including," and variations thereof are used in the present disclosure, these terms are intended to be comprehensive, similar to a term "provided with (comprising)." Furthermore, the term "or" used in the present disclosure is intended not to be an exclusive OR.

A radio frame may include one or more frames in the time domain. In the time domain, each of one or more frames may be referred to as a subframe. The subframe may further include one or more slots in the time domain. The subframe may have a fixed time length (for example, 1 ms) not depending on numerology.

The numerology may be a communication parameter applied to at least one of transmission and reception of a certain signal or channel. For example, the numerology may indicate at least one of a subcarrier spacing (SCS: SubCarrier Spacing), a bandwidth, a symbol length, a cyclic prefix length, a transmission time interval (TTI: Transmission Time Interval), a number of symbols per TTI, a radio frame configuration, a specific filtering process performed in the frequency domain by a transceiver, a specific windowing process performed in the time domain by a transceiver, and the like.

The slot may include one or more symbols (Orthogonal Frequency Division Multiplexing (OFDM) symbols, Single Carrier Frequency Division Multiple Access (SC-FDMA) symbols, or the like) in the time domain. The slot may be a time unit based on the numerology.

The slot may include a plurality of mini slots. Each mini slot may include one or more symbols in the time domain. Furthermore, the mini slot may be referred to as a sub-slot. The mini slot may include fewer symbols than a slot. A PDSCH (or PUSCH) transmitted in a unit of time greater than a mini slot may be referred to as a PDSCH (or PUSCH) mapping type A. A PDSCH (or PUSCH) transmitted using a mini slot may be referred to as a PDSCH (or PUSCH) mapping type B.

Any one of a radio frame, a subframe, a slot, a mini slot, and a symbol indicates a time unit for transmitting a signal. As a radio frame, a subframe, a slot, a mini slot, and a symbol, different names corresponding to them may be used.

For example, one subframe may be referred to as a transmission time interval (TTI: Transmission Time Interval), or a plurality of consecutive subframes may be referred to as TTIs, or one slot or one mini slot may be referred to as a TTI. In other words, at least one of the subframe and the TTI may be a subframe (1 ms) in the existing LTE, may be a period shorter than 1 ms (for example, 1 to 13 symbols), or may be a period longer than 1 ms. A unit representing the TTI may be referred to as slot, a mini slot, or the like instead of the subframe.

Here, for example, the TTI refers to a minimum time unit of scheduling in radio communication. For example, in the LTE system, the base station performs scheduling of allocating a radio resource (a frequency bandwidth, a transmission power, or the like which can be used in each terminal 20) to each terminal 20 in units of TTIs. The definition of the TTI is not limited thereto.

The TTI may be a transmission time unit such as a channel coded data packet (transport block), a code block, or a code word, or may be a processing unit such as scheduling or link adaptation. Furthermore, when a TTI is provided, a time interval (for example, the number of symbols) in which a transport block, a code block, a code word, or the like is actually mapped may be shorter than the TTI.

When one slot or one mini slot is referred to as a TTI, one or more TTIs (that is, one or more slots or one or more mini slots) may be a minimum time unit of scheduling. Furthermore, the number of slots (the number of mini slots) forming the minimum time unit of scheduling may be controlled.

A TTI having a time length of 1 ms may be referred to as a common TTI (TTI in LTE Rel. 8 to 12), a normal TTI, a long TTI, a common subframe, a normal subframe, a long subframe, a slot, or the like. A TTI shorter than the common TTI may be referred to as a reduced TTI, a short TTI, a partial TTI (a partial or fractional TTI), a reduced subframe, a short subframe, a mini slot, a sub slot, a slot, or the like.

Furthermore, a long TTI (for example, a normal TTI, a subframe, or the like) may be replaced with a TTI having a time length exceeding 1 ms, and a short TTI (for example, a reduced TTI or the like) may be replaced with a TTI having a TTI length that is shorter than a TTI length of a long TTI and that is longer than or equal to 1 ms.

The resource block (RB) is a resource allocation unit in the time domain and the frequency domain and may include one or more consecutive subcarriers in the frequency domain. The number of subcarriers included in an RB may be the same irrespective of a numerology and may be, for example, 12. The number of subcarriers included in an RB may be determined based on a numerology.

Furthermore, a time domain of an RB may include one or more symbols and may be a length of one slot, one mini slot, one subframe, or one TTI. One TTI, one subframe, or the like may be formed of one or more resource blocks.

Furthermore, one or more RBs may be referred to as a physical resource block (PRB: Physical RB), a sub carrier group (SCG: Sub-Carrier Group), a resource element group (REG: Resource Element Group), a PRB pair, an RB pair, or the like.

Furthermore, the resource block may be formed of one or more resource elements (RE: Resource Element). For example, one RE may be a radio resource region of one subcarrier and one symbol.

A bandwidth part (BWP: Bandwidth Part) (which may be referred to as a partial bandwidth) may indicate a subset of consecutive common resource blocks (RBs) for a certain numerology in a certain carrier. Here, a common RB may be specified by an index of an RB based on a common reference point of a carrier. A PRB may be defined in a BWP and numbered in a BWP.

The BWP may include a BWP for UL (UL BWP) and a BWP for DL (DL BWP). In a UE, one or more BWPs may be configured within one carrier.

At least one of configured BWPs may be active, and the UE need not assume that predetermined signals/channels are transmitted and received outside an active BWP. Furthermore, a "cell," a "carrier," or the like in the present disclosure may be replaced with a "BWP."

Structures of the radio frame, the sub frame, slot, the mini slot, and the symbol are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, a symbol length, a cyclic prefix (CP) length, and the like can be variously changed.

In the present disclosure, for example, when an article such as "a," "an," or "the" in English is added by a translation, the present disclosure may include a case in which a noun following the article is the plural.

In the present disclosure, a term "A and B are different" may mean "A and B are different from each other." Furthermore, the term may mean "each of A and B is different from C." Terms such as "separated," "coupled," or the like may also be interpreted similarly to "different."

Each aspect/embodiment described in the present disclosure may be used alone, in combination, or may be switched in accordance with the execution. Furthermore, notification of predetermined information (for example, notification of "being X") is not limited to notification performed explicitly, but may be performed implicitly (for example, not notifying the predetermined information).

In the present disclosure, an SS block or a CSI-RS is an example of a synchronization signal or a reference signal.

Although the present disclosure is described above in detail, it is obvious to those skilled in the art that the present disclosure is not limited to the embodiments described in the present disclosure. The present disclosure may be implemented as revised and modified embodiments without departing from the gist and scope of the present disclosure as set forth in claims. Accordingly, the description of the present disclosure is for the purpose of illustration and does not have any restrictive meaning to the present disclosure.

### [Reference Signs List]

10 base station
110 transmitting unit
120 receiving unit
130 configuration unit
140 control unit
20 terminal
210 transmitting unit
220 receiving unit
230 configuration unit
240 control unit
1001 processor
1002 storage device
1003 auxiliary storage device
1004 communication device
1005 input device
1006 output device

## Claims

1. A terminal comprising:
a receiving unit that receives information indicating activation of a secondary cell;
a control unit that activates the secondary cell based on the information received by the receiving unit and a temporary reference signal transmitted via the secondary cell, the temporary reference signal being transmitted at a timing after the reception of the information, the timing after the reception of the information being prior to receiving a first synchronization signal block with respect to time via the secondary cell; and
a transmitting unit that reports channel state information based on the temporary reference signal.

2. The terminal according to claim 1, wherein, if the receiving unit receives the information indicating the activation of the secondary cell and trigger information of the temporary reference signal within a fixed period of time, the control unit activates the secondary cell based on the temporary reference signal.

3. The terminal according to claim 1, wherein, if the receiving unit does not receive the information indicating the activation of the secondary cell and trigger information of the temporary reference signal within a fixed period of time, the control unit activates the secondary cell based on the synchronization signal block.

4. The terminal according to claim 1, wherein the information indicating the activation of the secondary cell is trigger information of the temporary reference signal.

5. A communication method executed by a terminal, the method comprising:
receiving information indicating activation of a secondary cell;
activating the secondary cell based on the received information and a temporary reference signal transmitted via the secondary cell, the temporary reference signal being transmitted at a timing after the reception of the information, the timing after the reception of the information being prior to receiving a first synchronization signal block with respect to time via the secondary cell; and
reporting channel state information based on the temporary reference signal.

6. A base station comprising:
a transmitting unit that transmits, to a terminal, information indicating activation of a secondary cell;
a control unit that determines that the terminal activates the secondary cell based on the information transmitted by the transmitting unit and a temporary reference signal transmitted via the secondary cell, the temporary reference signal being transmitted at a timing after the transmission of the information, the timing after the transmission of the information being prior to transmitting a first synchronization signal block with respect to time via the secondary cell; and
a receiving unit that receives a channel state information report based on the temporary reference signal.
